# EUROPÄISCHE PATENTSCHRIFT

(11) **EP 1 008 292 B1**
(45) Veröffentlichungstag und Bekanntmachung des Hinweises auf die Patenterteilung: **19.11.2003**
(21) Anmeldenummer: 99123880.9
(22) Anmeldetag: 02.12.1999
(51) Int. Cl.: A01F 15/08

(54) **Verfahren und Vorrichtung zum Herstellen von hochverdichteten Rundballen aus landwirtschaftlichen Erntegütern**
Process and device for manufacturing highly compacted round bales of agricultural harvest produce
Procédé et dispositif pour fabriquer des balles rondes à haute densité de produits de récolte agricoles

(30) Priorität: 10.12.1998 DE 19856977
(43) Veröffentlichungstag der Anmeldung: 14.06.2000
(73) Patentinhaber: Lely Maschinenfabrik GmbH, 38304 Wolfenbüttel (DE)
(72) Erfinder: Wilkens, Dieter, Dr.-Ing., 38302 Wolfenbüttel-Ahlum (DE); Honhold, Joost, 38302 Wolfenbüttel (DE)

(56) Entgegenhaltungen:
- EP-A- 0 150 629
- DE-A- 19 718 229
- FR-A- 2 615 351
- US-A- 5 622 104

## Beschreibung

Die Erfindung betrifft ein Verfahren zum Herstellen von hochverdichteten Rundballen aus landwirtschaftlichen Erntegütern wie Anwelkgras, Heu oder Stroh in einem variablen Preßraum, der umfangsseitig durch Riemen, Stabkettenförderer, Walzen o. ä. begrenzt ist, die während des Aufrollens des Erntegutes zu einem Ballen gegen die Kraft von Vorspannmitteln ausweichen, wobei der Preßdruck, den die Riemen, Stabkettenförderer, Walzen o. ä. auf das Erntegut ausüben bei Überschreiten eines vorbestimmten Grenzwertes des Antriebsmomentes der Rundballenpresse reduziert wird.

Die Erfindung betrifft ferner eine Rundballenpresse zum Herstellen von hochverdichteten Rundballen aus landwirtschaftlichen Erntegütern wie Anwelkgras, Heu oder Stroh oder aus anderen Materialien, insbesondere zur Durchführung des vorstehend genannten Verfahrens mit einem Fühler im Antriebsbereich der Rundballenpresse, welcher in Wirkverbindung mit Mitteln zum Reduzieren des Preßdruckes bei Überschreiten vorbestimmter Grenzwerte des Antriebsmomentes steht.

Ein wichtiges Kriterium beim Pressen von Rundballen ist die Erzielung einer hohen Preßdichte. Nur stark verdichtete Rundballen ergeben sowohl ein wirtschaftlich vertretbares Transportvolumen als auch ein günstiges Lagervolumen. Auch sind solche Ballen formstabiler als lose gepreßte. Ferner ist eine hohe Preßdichte Voraussetzung für einen guten Silierverlauf.

Die erzielbare Preßdichte wird neben Gutart und -feuchte sowie Gutzuführgeschwindigkeit hauptsächlich vom Preßsystem, dem aufzubringenden Preßdruck und der zur Verfügung gestellten Antriebsleistung beeinflußt.

Eine Rundballenpresse der eingangs beschriebenen Art läßt sich beispielsweise der EP 0150629 entnehmen. Die Vorspannmittel für die Riemen sind während des Preßvorganges in einem geschlossenen Hydrauliksystem angeordnet, das von Hydrozylindem, einem einstellbaren Druckbegrenzungsventil und einem 4 / 3 Wegeventil gebildet wird. Vor Beginn des Preßvorganges wird das Hydrauliksystem mit dem gewünschten Preßdruck aufgeladen und dann geschlossen. Wird mit größer werdendem Ballendurchmesser der am Druckbegrenzungsventil eingestellte Druck überschritten, so öffnet dieses und der Kolben des Hydrozylinders fährt mit weiter zunehmendem Ballendurchmesser aus. Ist der eingestellte Preßdruck zu hoch, so sprechen Überlastsicherungen im Antriebsstrang der Rundballenpresse an mit dem Nachteil, daß der Ballen nicht mehr fertiggestellt werden kann, also ungebunden aus dem Preßraum ausgestoßen werden muß. Um das Ansprechen dieser Überlastkupplungen zu vermeiden, wird in der EP 150629 vorgeschlagen, ein Drehmomentmeßgerät in der Hauptantriebswelle anzuordnen, welches nur bei Überschreiten eines voreingestellten Drehmoments eine Reduzierung, also Verstellung des eingestellten Druckes am Druckbegrenzungsventil bewirkt, indem dieses solange Druckflüssigkeit abläßt, bis das Drehmoment zulässige Werte erreicht, worauf das Druckbegrenzungsventil wieder selbsttätig schließt. Hierbei ist es nachteilig, daß der gepreßte Ballen durch die Reduzierung des Preßdruckes expandiert, also größer wird und die Preßdichte des Ballens abnimmt.

In der FR 2615351 ist eine Rundballenpresse dargestellt und beschrieben, die ebenfalls eine hydraulische Riemenspanneinrichtung aufweist, welche in Abhängigkeit vom Ballendurchmesser den Preßdruck durch eine Kurvenbahn vergrößert, die die wirksame Hebelarmlänge des Hydrozylinders verstellt. Nachteilig ist, daß bei entsprechend hohem Durchsatz der Druck zusätzlich erhöht wird, was zu Überlastungen führen kann und starke Drehmomentschwankungen verursacht.

Eine in der US 4,257,219 gezeigte Vorrichtung weist eine Steuervorrichtung auf, die zu Beginn der Ballenbildung einen geringen Preßdruck und später einen erhöhten Preßdruck auf den Ballen aufbringen soll. Die Umschaltung erfolgt mechanisch in Abhängigkeit vom Ballendurchmesser.

Die DE 197 18 229 offenbart eine Regelung des Preßdruckes zwischen oberen und unteren Grenzwerten mittels eines verstellbaren Druckbegrenzungsventiles in einem geschlossenen Hydrauliksystem.

Allen diesen Rundballenpressen gemeinsam ist folgender Nachteil: Wird die Gutzufuhr, z.B. im Vorgewende unterbrochen oder aufgrund dünnerer Schwaden verringert, sinken der Leistungsbedarf und der Preßdruck ab, wodurch die Preßdichte verringert und weder die Pressen- noch die Schlepperantriebsleistung voll ausgenutzt wird.

Der Erfindung liegt die Aufgabe zugrunde, ein Verfahren sowie eine Vorrichtung zu entwickeln, mit denen sich Rundballen mit höchster Preßdichte durch eine gleichmäßig hohe Auslastung von Schlepper und Presse erzielen lassen.

Diese Aufgabe wird erfindungsgemäß hinsichtlich des Verfahrens dadurch gelöst, daß der Preßdruck während der Ballenbildung bei unterbrochener oder relativ geringer Gutzufuhr in den Preßraum der Rundballenpresse selbsttätig erhöht wird

Die der Erfindung zugrundeliegende Aufgabe wird hinsichtlich der Vorrichtung dadurch gelöst, daß Mittel zum Erhöhen des Preßdruckes über vorgegebene Preßdrucksollwerte vorgesehen sind.

Mit dem erfindungsgemäßen Verfahren bzw. der erfindungsgemäßen Vorrichtung können somit ungenutzte Leistungspotentiale auf einfache Art und Weise verwendet werden zur Erhöhung der Preßdichte des Ballens, wobei eine gleichmäßige Schlepperauslastung auch günstig für den Energieverbrauch ist.

Erfindungsgemäß ist es zweckmäßig, wenn der Preßdruck beim Unterschreiten eines unteren, voreinstellbaren Grenzwertes des Antriebsmomentes erhöht wird. Dabei ist es vorteilhaft, daß der Preßdruck maximal bis zu einem einstellbaren, oberen Grenzwert des Antriebsmomentes oder der Preßkraft erhöht wird.

Je nach Materialart, Preßdichte und Durchmesser des sich in der Bildung befindlichen Ballens bewirkt die Preßdruckerhöhung eine mehr oder weniger große Verkleinerung des Durchmessers des Preßraumes bzw. des Ballens, woraus eine entsprechende Preßdichteerhöhung resultiert. Darüber hinaus kann bei Erreichen des gewünschten Ballendurchmessers eine Preßdruckerhöhung eine festere Außenschicht bewirken, was für die Wetterunempfindlichkeit der Ballen günstig ist.

In Ausgestaltung der Erfindung werden Mittel zum Erhöhen des Preßdruckes über vorgegebene Preßdrucksollwerte vorgeschlagen. Dabei weisen die Mittel eine Steuer- oder Regeleinrichtung mit einer Druckquelle oder analogen Energiequellen zum Erhöhen des Preßdruckes auf. Die Druckquelle steht nunmehr zum permanenten stufenlosen Verstellen des Preßdruckes und insbesondere zur Preßdruckerhöhung ständig zur Verfügung und nicht nur zum Druckaufbau zu Beginn des Preßvorganges gemäß dem Stand der Technik.

Da zu Beginn jeder Ballenbildung ein geringerer Preßdruck wünschenswert ist, steht ein Sensor zum direkten oder indirekten Messen (z. B. über Walzendrehzahl) des Ballendurchmessers mit der Regeleinrichtung in Wirkverbindung.

Weitere zweckmäßige Ausgestaltungen der Erfindung ergeben sich aus den Unteransprüchen und aus der nachfolgenden Beschreibung eines Ausführungsbeispieles anhand der Zeichnung. Es zeigt:
- Fig. 1: einen Längsschnitt einer erfindungsgemäßen Rundballenpresse mit variablem Preßraum in schematischer Darstellung und
- Fig. 2: die Beziehung zwischen dem Antriebsmoment und dem Ballengewicht in graphischer Darstellung bei einer Rundballenpresse gemäß Figur 1 während eines Ballenbildungsvorganges mit und ohne einer erfindungsgemäßen Einrichtung.

Die Rundballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in Arbeitsrichtung der Rundballenpresse ein mit 4 bezifferter Aufsammler (Pick up) üblicher Bauart vorgeordnet. Auf dem Fahrgestell 1 ist ein allgemein mit 5 beziffertes Preßraumgehäuse angeordnet, bestehend aus einem gestellfesten Vordergehäuse 6 mit vorderen Seitenwänden 7 und aus einem gelenkig mit dem Vordergehäuse 6 verbundenen Hintergehäuse 8 mit hinteren Seitenwänden 9, welches nach Formung eines Ballens um eine obere Schwenkachse 10 zum Ballenausstoß aufklappbar ist.

Zwischen sich gegenüberliegenden, einander entsprechenden Seitenwänden 7 bzw. 9 erstrecken sich mehrere Walzen 11, 12, die ortsfest aber drehbar an den Seitenwänden 7, 9 montiert sind. Auf den Walzen 11, 12 liegen nebeneinander angeordnet mehrere endlose Riemen 13, die zwischen den Seitenwänden 7, 9 einen ausdehnbaren Ballenpreßraum 14 zum Formen eines zylindrischen Ballens bilden. Nach unten ist der Ballenpreßraum 14 durch zwei Walzen 15 begrenzt und weist eine Einlaßöffnung 16 auf. Nach oben ist der Ballenpreßraum 14 durch zwei im engen gegenseitigen Abstand auf einer um eine Achse 17 schwenkbaren Riemenspanneinrichtung 18 angeordneten Rollen 19, 20 abgeschlossen, die zwischen sich zwei Riemenabschnitte 21,22 führen. Der Antrieb der Riemen 13 erfolgt durch die Walze 23, die durch einen Kettentrieb 24 mit einem Hauptgetriebe 25 verbunden ist, das mittels einer Gelenkwelle 26 mit einer nicht dargestellten Schlepperzapfwelle gekoppelt ist. Zwischen Hauptgetriebe 25 und Gelenkwelle 26 ist eine an sich bekannte Drehmomentmeßnabe 27 angeordnet, diese kann aber auch im Antrieb der Walze 23 angeordnet sein.

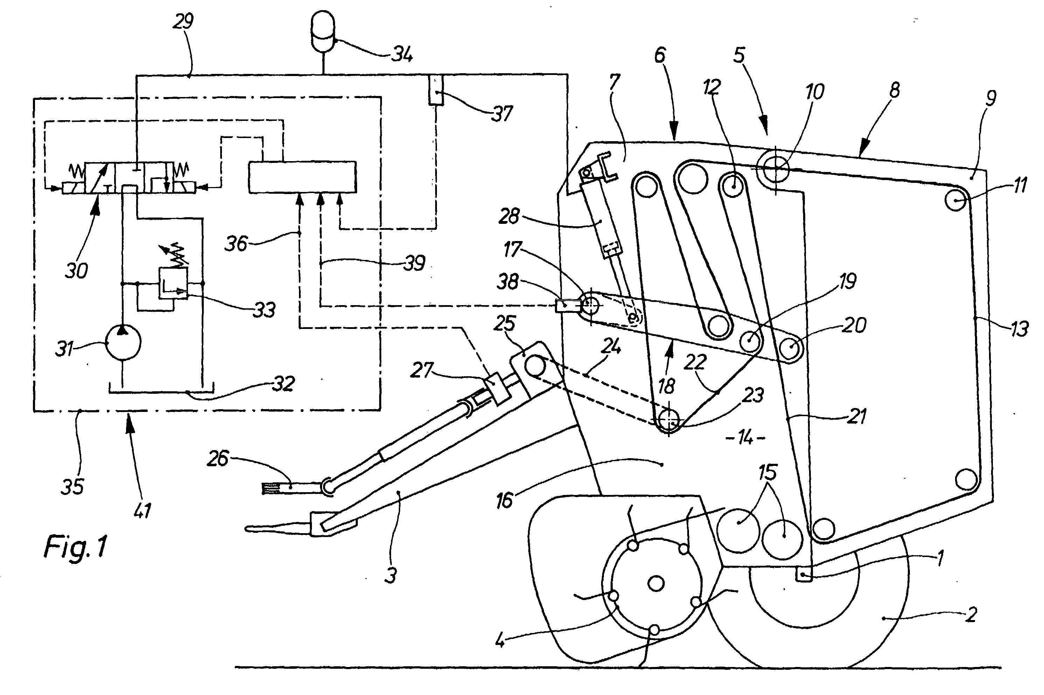

Die Riemenspanneinrichtung 18 ist auf beiden Seiten der Rundballenpresse durch je einen einfachwirkenden Hydrozylinder 28 mit dem Vordergehäuse 6 verbunden. Die Hydrozylinder 28 sind zylinderraumseitig an eine gemeinsame Druckleitung 29 mit einem elektromagnetisch betätigbaren 3 / 3 Proportional-Wegeventil 30 angeschlossen. Das 3 / 3 Wegeventil 30 hat eine mittlere Umlauf-Nullstellung, wie in der Figur 1 dargestellt, in der eine Hydropumpe 31 Druckmittel aus einem Vorratsbehälter 32 entnimmt und durch eine Vorlauf- sowie eine Rücklaufleitung drucklos umfördert. Vorlauf- und Rücklaufleitung sind miteinander durch ein einstellbares Druckbegrenzungsventil 33 verbunden. Durch Betätigen des linken Elektromagnetventiles wandert der Steuerkolben nach rechts, so daß die Pumpe 31 Druckmittel in die Druckleitung 29 fördert; bei Betätigung des rechten Elektromagnetventiles wird entsprechend Öl aus der Druckleitung 29 abgelassen und strömt zum Vorratsbehälter 32 zurück. Zur Dämpfung der Druckregelung ist an die Druckleitung 29 ein beispielsweise mit 50 bar vorgespannter Druckspeicher 34 angeschlossen. Der maximale Druck in der Druckleitung 29 läßt sich am Druckbegrenzungsventil 33 voreinstellen. Das 3 / 3 Wegeventil 30 ist Bestandteil einer elektronischen Steuer- oder Regeleinrichtung, die allgemein mit der Ziffer 35 gekennzeichnet ist.

Die Steuer- oder Regeleinrichtung 35 hat drei Eingangsgrößen: Das über die Drehmomentmeßnabe 27 im Hauptantrieb gemessene Drehmoment 36, den in der Druckleitung 29 durch einen Drucksensor 37 gemessenen Hydraulikdruck, der ein Maß für den Preßdruck ist, den die Riemen 13 auf das Erntegut ausüben und einen an der Schwenkachse 17 der Riemenspanneinrichtung 18 angeordneten Meßsensor 38 für den Ballendurchmesser 39, z. B. Drehpotentiometer. An der Regeleinrichtung 35 bzw. Bedieneinheit sind wenigstens Sollwerte für das Drehmoment bzw. die verfügbare Antriebsleistung (oberer Grenzwert) sowie unterer Grenzwert entsprechend der Ansprechschwelle für eine Preßdruckerhöhung und Sollwerte für den Preßdruck bzw. Hydraulikdruck in Abhängigkeit von der Gutart und -feuchte einstellbar. Die Ist-Druckwerte werden mit dem Drucksensor 37 gemessen und durch die Steuer- oder Regeleinrichtung 35 während des normalen Preßbetriebes auf die Drucksollwerte eingeregelt. Ferner ist ein Sollwert voreinstellbar für den Ballenanfangsdurchmesser, ab dem das Antriebsmoment bzw. die -leistung konstant gehalten werden soll. Von der Steuer- oder Regeleinrichtung 35 führen zwei Steuerleitungen 40,41 zum 3/3 Proportional-Wegeventil 30.

Die Arbeitsweise der erfindungsgemäßen Presse ist wie folgt:

Zunächst stellt man an der Bedieneinheit bzw. der Steuer- oder Regeleinrichtung 35 die an der Zapfwelle verfügbare Pressenantriebsleistung, z. B. 40 KW ein und den unteren Grenzwert von z. B. 35 KW sowie einen Preßdrucksollwert von z. B. 120 bar für Stroh und einen Ballenanfangsdurchmesser von 0,6 m ein. Ab einem Ballendurchmesser von 0,6 m erhält die Steuer- oder Regeleinrichtung 35 das Signal für eine Konstantleistungsregelung. Fällt nun die Gutzuführmenge, z. B. durch dünnere Schwaden oder im Vorgewende ab, werden die Hydrozylinder 28 über die Steuer- oder Regeleinrichtung 35 durch Verstellen des 3 / 3 Wegeventiles 30 so mit Öl beaufschlagt, daß eine gleichbleibende Antriebsleistung während der Ballenbildung durch eine entsprechende Erhöhung der Preßdichte bzw. des Preßdruckes erreicht wird, d. h. beim Durchschreiten des unteren Grenzwertes von 35 KW wird die Leistungsreserve von 5 KW zur Preßdichteerhöhung genutzt. Dabei wird der Hydraulikdruck unabhängig vom voreingestellten Preßdruck von 120 bar, jedoch drehmomentabhängig vorübergehend automatisch gegebenenfalls bis zum höchsten, am Druckbegrenzungsventil 33 auf 180 bar eingestellten Systemdruck erhöht, wodurch im Extremfall eine Ballendurchmesserverkleinerung von 3 bis 5 % je nach Durchmesser und Dichte erreicht wird. Dadurch steigt das Drehmoment kurzzeitig an, wird anschließend aber auf den dem Preßdruck-Sollwert entsprechenden Wert eingeregelt.

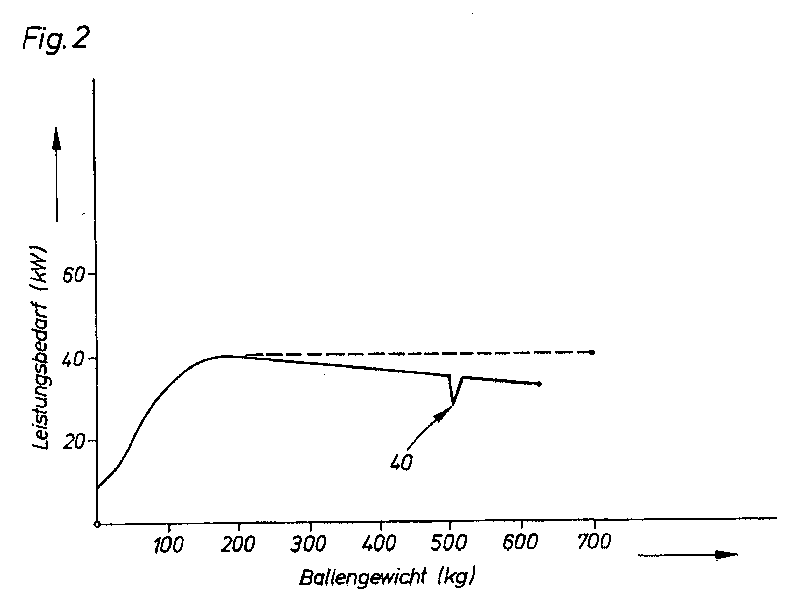

In Figur 2 ist der typische Verlauf des Leistungsbedarfes bei einer Rundballenpresse mit variablem Preßraum 14 während der Ballenbildung in Voll-Linie über dem Ballengewicht oder auch über der Preßzeit aufgetragen. Im Leerlauf ohne Gutzufuhr hat die Presse einen Leistungsbedarf von ca. 5 KW. Bei Gutzufuhr steigt der Leistungsbedarf zunächst etwa linear an, erreicht ein Maximum und flacht dann abhängig von der Gutzufuhr über dem Ballengewicht leicht ab bzw. fällt sprungartig ab (siehe Pfeil 40), wenn keine Gutzufuhr erfolgt, was eine schlechte Ausnutzung der Schlepper- bzw. Pressenleistung sowie schlechte Ballenpreßdichten bzw. relativ niedrige Ballengewichte zur Folge hat. In Strichlinie ist der Leistungsverlauf der erfindungsgemäßen Rundballenpresse unter gleichen Gutzufuhrbedingungen wie vorstehend beschrieben eingetragen. Ab dem Optimum ist der mittlere Leistungsbedarf nahezu konstant über dem Ballengewicht. Presse und Schlepper sind gleichmäßig ausgelastet; es ergeben sich ca. 15 % höhere Ballengewichte bei gleichen Ballenenddurchmessern.

## Patentansprüche

1. Verfahren zum Herstellen von hochverdichteten Rundballen aus landwirtschaftlichen Erntegütern wie Anwelkgras, Heu oder Stroh in einem variablen Preßraum (14), der umfangsseitig durch Riemen (13), Stabkettenförderer, Walzen (15) o. ä. begrenzt ist, die während des Aufrollens des Erntegutes zu einem Ballen gegen die Kraft von Vorspannmitteln (18,28) ausweichen, wobei der Preßdruck, den die Riemen (13), Stabkettenförderer, Walzen (15) o. ä. auf das Erntegut ausüben in Abhängigkeit vom Antriebsmoment (36) der Rundballenpresse gesteuert wird, **dadurch gekennzeichnet, daß** der Preßdruck während der Ballenbildung bei unterbrochener oder relativ geringer Gutzufuhr in den Preßraum (14) der Rundballenpresse selbsttätig erhöht wird.

2. Verfahren nach Anspruch 1, **dadurch gekennzeichnet, daß** der Preßdruck beim Unterschreiten eines unteren, voreinstellbaren Grenzwertes des Antriebsmomentes (36) erhöht wird.

3. Verfahren nach Anspruch 1 oder 2, **dadurch gekennzeichnet, daß** die Preßdruckerhöhung eine Verkleinerung des Durchmessers des Preßraumes (14) bzw. des Ballens gegenüber dem Durchmesser des sich gerade in der Bildung befindlichen Ballens bewirkt

4. Verfahren nach einem der vorhergehenden Ansprüche, **dadurch gekennzeichnet, daß** der Preßdruck maximal bis zu einem einstellbaren, oberen Grenzwert des Antriebsmomentes (36) oder der Preßkraft erhöht wird.

5. Verfahren nach einem der Ansprüche 1 bis 4, **dadurch gekennzeichnet, daß** das Antriebsmoment (36) bzw. die Antriebsleistung ständig gemessen wird und die Meßsignale zur Steuerung des Preßdruckes verwendet werden.

6. Verfahren nach einem oder mehreren der vorhergehenden Ansprüche, **dadurch gekennzeichnet, daß** der Preßdruck in Abhängigkeit vom Antriebsmoment (36) der Rundballenpresse so geregelt wird, daß das Antriebsmoment während der Ballenformung ab einem Ballenanfangsdurchmesser von ca. 60 cm einen nahezu konstanten Verlauf über dem Ballengewicht oder analogen Parametern hat.

7. Verfahren zum Herstellen von hochverdichteten Rundballen aus landwirtschaftlichen Erntegütern wie Anwelkgras, Heu oder Stroh in einem konstanten Preßraum (14), der umfangsseitig wenigstens eine in den Ballenpreßraum (14) unter Vorspannung in Abhängigkeit vom Antriebsmoment (36) der Rundballenpresse einschwenkbare Walze (15) aufweist, **dadurch gekennzeichnet, daß** die Vorspannkraft dieser Walze (15) während der Ballenbildung bei unterbrochener oder relativ geringer Gutzufuhr in dem Preßraum (14) selbsttätig erhöht wird.

8. Rundballenpresse zum Herstellen von hochverdichteten Rundballen aus landwirtschaftlichen Erntegütern wie Anwelkgras, Heu oder Stroh, oder aus anderen Materialien, insbesondere zur Durchführung des Verfahrens nach einem der vorhergehenden Ansprüche, mit einem Fühler (27) im Antrieb (23 bis 26) der Rundballenpresse, welcher in Wirkverbindung mit Mitteln zum Reduzieren des Pressdruckes bei Überschreiten vorbestimmter Grenzwerte des Antriebmomentes steht, **dadurch gekennzeichnet, dass** Mittel (41) zum Erhöhen des Pressdruckes über vorgegebene Pressdrucksollwerte vorgesehen sind.

9. Rundballenpresse nach Anspruch 8, **dadurch gekennzeichnet, daß** die Mittel (41) eine Steuer - oder Regeleinrichtung (35) mit einer Druckquelle (31) oder analogen Energiequellen zum Erhöhen des Preßdruckes aufweisen.

10. Rundballenpresse nach Anspruch 9, **dadurch gekennzeichnet, daß** die Steuer- oder Regeleinrichtung (35) bzw. eine Bedieneinheit programmierbar ist und wenigstens Sollwerte für den Preßdruck, den Ballenanfangsdurchmesser sowie ein unterer und oberer Grenzwert für das Antriebsmoment (36) an der Rundballenpresse vorgebbar sind.

11. Rundballenpresse nach einem der Ansprüche 8 bis 10, **gekennzeichnet durch** einen drehmoment- oder druck- oder kraft- oder drehzahl- oder wegaufnehmenden Sensor (27) im Antriebsbereich der Rundballenpresse oder **durch** einen weg- oder stellungsaufnehmenden Sensor für den Niederhalter im Aufsammlerbereich der Rundballenpresse oder **durch** einen direkt oder indirekt das Ballengewicht darstellenden Sensor.

12. Rundballenpresse nach einem der Ansprüche 8 bis 11, **gekennzeichnet durch** einen druck- oder kraftaufnehmenden, im Wirkbereich der Vorspannmittel (18,28) angeordneten Sensor (37).

13. Rundballenpresse nach einem der Ansprüche 8 bis 12, **gekennzeichnet durch** einen Sensor (38) zum direkten oder indirekten Messen des Ballendurchmessers (39) während der Ballenbildung, welcher mit der Steuer- oder Regeleinrichtung (35) in Wirkverbindung steht.

## Claims

1. A method of producing highly compacted round bales of agricultural harvested crops, such as wilted grass, hay or straw in a variable baling chamber (14), which is defined circumferentially by belts (13), bar and chain assemblies, rollers (15) or the like, which are deflected against the force of pretensioning means (18, 28) during rolling up of the harvested crop into a bale, the compressive pressure which the belts (13), bar and chain assemblies, rollers (15) or the like exert on the harvested crop being controlled as a function of the driving torque (36) of the round baler, **characterised in that** the compressive pressure is increased automatically during bale formation in the event of interrupted or relatively low crop feed into the baling chamber (14) of the round baler.

2. A method according to claim 1, **characterised in that** the compressive pressure is increased if the driving torque (36) falls below a lower, presettable limit value.

3. A method according to claim 1 or claim 2, **characterised in that** the increase in compression density effects a decrease in the diameter of the baling chamber (14) and/or the bale relative to the diameter of the bale being formed at that moment.

4. A method according to one of the preceding claims, **characterised in that** the compressive pressure is increased maximally up to an adjustable, upper limit value for driving torque (36) or pressure force.

5. A method according to one of claims 1 to 4, **characterised in that** the driving torque (36) and/or the drive power is measured constantly and the measuring signals are used to control the compressive pressure.

6. A method according to one or more of the preceding claims, **characterised in that** the compressive pressure is controlled in such a way as a function of'the driving torque (36) of the round baler that the driving torque has a virtually constant profile in relation to bale weight or similar parameters during bale formation from an initial bale diameter of approx. 60 cm.

7. A method of producing highly compacted round bales of agricultural harvested crops, such as wilted grass, hay or straw in a constant baling chamber (14), which circumferentially comprises at least one roller (15) swivellable into the baling chamber (14) under pretension as a function of the driving torque (36) of the round baler, **characterised in that** the pretensioning force of this roller (15) is increased automatically during bale formation in the event of interrupted or relatively low crop feed in the baling chamber (14).

8. A round baler for producing highly compacted round bales from agricultural harvested crops such as wilted grass, hay or straw or other materials, in particular for carrying out the method according to one of the preceding claims, having a sensor (27) in the drive (23 to 26) of the round baler, which is in active connection with means for reducing the compressive pressure in the event of predetermined driving torque limit values being exceeded, **characterised in that** means (41) are provided for increasing the compressive pressure above predetermined compressive pressure desired values.

9. A round baler according to claim 8, **characterised in that** the means (41) comprise an open- or closed-loop control device (35) with a pressure source (31) or similar energy sources for increasing the compressive pressure.

10. A round baler according to claim 9, **characterised in that** the open- or closed-loop control device (35) and/or an operating unit is/are programmable and at least desired values for the compressive pressure, the initial bale diameter and lower and upper limit values for the driving torque (36) may be predetermined at the round baler.

11. A round baler according to one of claims 8 to 10, **characterised by** a torque- or pressure- or force- or speed- or distance-recording sensor (27) in the drive area of the round baler or by a distance- or position-recording sensor for the holding-down device in the pick-up area of the round baler or by a sensor directly or indirectly displaying the bale weight.

12. A round baler according to one of claims 8 to 11, **characterised by** a pressure- or force-recording sensor (37) arranged in the active area of the pretensioning means (18, 28).

13. A round baler according to one of claims 8 to 12, **characterised by** a sensor (38) for direct or indirect measurement of the bale diameter (39) during bale formation, which sensor (38) is in active connection with the open- or closed-loop control device (35).

## Revendications

1. Procédé de fabrication de balles rondes à haute densité de produits de récoltes agricoles, tels que de l'herbe préfanée, du foin ou de la paille dans un chambre de compression (14) variable, qui est délimitée au niveau de sa périphérie par des courroies (13), des convoyeurs à barrettes, des rouleaux (15), ou similaire, qui pendant l'enroulement des produits de récoltes en une balle évitent l'effort de moyens de précontrainte (18, 28), la pression de compression exercée par les courroies (13), les convoyeurs à barrettes, les rouleaux (15), ou similaire sur le produit de récolte étant contrôlée en fonction du couple d'entraînement (36) de la presse à balles rondes, **caractérisé en ce que**, durant la formation des balles, la pression de compression est augmentée automatiquement lors d'apports de produits interrompus ou relativement restreints dans la chambre de compression (14) de la presse à balles rondes.

2. Procédé selon la revendication 1, **caractérisé en ce que** la pression de compression est augmentée lors du dépassement négatif d'une valeur limite inférieure paramétrable du couple d'entraînement (36).

3. Procédé selon la revendication 1 ou 2, **caractérisé en ce que** l'augmentation de la pression de compression provoque une réduction du diamètre de la chambre de compression (14) ou de la balle par rapport au diamètre de la balle précisément en cours de formation.

4. Procédé selon l'une quelconque des revendications précédentes, **caractérisé en ce que** la pression de compression est augmentée au maximum jusqu'à une valeur limite supérieure réglable du couple d'entraînement (36) ou de la force de compression.

5. Procédé selon l'une quelconque des revendications 1 à 4, **caractérisé en ce que** le couple d'entraînement (36) et/ou la puissance motrice est mesuré en permanence et les signaux de mesure sont utilisés pour contrôler la pression de compression.

6. Procédé selon l'une ou plusieurs des revendications précédentes, **caractérisé en ce que** la pression de compression est réglée en fonction du couple d'entraînement (36) de la presse à balles rondes de manière à ce que le couple d'entraînement au cours de la formation des balles a, à partir d'un diamètre initial de balle d'environ 60 cm, une évolution à peu près constante quant au poids de balle ou aux paramètres analogues.

7. Procédé de fabrication de balles rondes à haute densité de produits de récoltes agricoles, tels que de l'herbe préfanée, du foin ou de la paille dans une chambre de compression (14) constante, qui présente au niveau de sa périphérie au moins un rouleau (15) orientable dans la chambre de compression de balles (14) sous précontrainte en fonction du couple d'entraînement (36) de la presse à balles rondes, **caractérisé en ce que** l'effort de précontrainte dudit rouleau (15) est augmenté automatiquement au cours de la formation de balles lors d'apports de produits interrompus ou relativement restreints dans la chambre de compression (14).

8. Presse à balles rondes destinée à fabriquer des balles rondes à haute densité de produits de récoltes agricoles, tels que de l'herbe préfanée, du foin ou de la paille, ou d'autres matériaux, en particulier pour la réalisation du procédé selon l'une quelconque des revendications précédentes, avec un capteur (27) dans l'entraînement (23 à 26) de la presse à balles rondes, lequel est relié effectivement à des moyens pour réduire la pression de compression en cas de dépassement positif des valeurs limites prédéfinies du couple d'entraînement, **caractérisé en ce que** des moyens (41) d'augmentation de la pression de compression sont prévus au-delà des valeurs prescrites de la pression de compression définies.

9. Presse à balles rondes selon la revendication 8, **caractérisée en ce que** les moyens (41) présentent un dispositif de commande ou de régulation (35) avec une source de pression (31) ou des sources d'énergie analogues pour l'augmentation de la pression de compression.

10. Presse à balles rondes selon la revendication 9, **caractérisée en ce que** le dispositif de commande ou de régulation (35) et/ou un serveur est programmable, et des valeurs prescrites pour la pression de compression, le diamètre initial de balle ainsi qu'une valeur limite inférieure ou supérieure pour le couple d'entraînement (36) sont au moins paramétrables sur la presse à balles rondes.

11. Presse à balles rondes selon l'une quelconque des revendications 8 à 10, **caractérisée par** un capteur (27) de couple de rotation ou de pression ou de force ou de vitesse de rotation ou de déplacement dans la zone d'entraînement de la presse à balles rondes ou par un capteur de déplacement ou de position pour le presse-feuilles dans la zone du ramasseur de la presse à balles rondes ou par un capteur représentant directement ou indirectement le poids de balle.

12. Presse à balles rondes selon l'une quelconque des revendications 8 à 11, **caractérisée par** un capteur (37) de pression ou de force placé dans la zone effective des moyens de précontrainte (18, 28).

13. Presse à balles rondes selon l'une quelconque des revendications 8 à 12, **caractérisée par** un capteur (38) pour la mesure directe ou indirecte du diamètre de balle (39) au cours de la formation de balles, ledit capteur étant relié effectivement au dispositif de commande ou de régulation (35).
